# EUROPEAN PATENT APPLICATION

(11) **EP 3 257 669 A1**
(43) Date of publication of application: **20.12.2017**
(21) Application number: 17175463.3
(22) Date of filing: 12.06.2017
(51) Int. Cl.: B32B 17/10

(54) **COLD-BENT GLAZING**

(30) Priority: 14.06.2016 NL 2016958
(71) Applicant: Movares Nederland B.V., 3511 SX Utrecht (NL)
(72) Inventor: Vákár, László Imre, 3511 SX Utrecht (NL)
(74) Representative: Vernout, Robert

(57) **Abstract**

Method for the production of cold-bent glazing, wherein use is made of a composite pane consisting of a sandwich of at least two flat glass panes and a plastic layer placed between each pair of glass panes and adhered thereto, wherein the pane is bent and is fixed to a frame at an ambient temperature which lies below the softening temperature of the plastic layer, and wherein after being fixed to the frame the pane is not heated, or is at least not heated as a whole, to a temperature lying above the softening temperature of the plastic layer, wherein the frame comprises engaging means for fixing the pane to the frame and holding the pane in bent state in position on the frame, wherein the engaging means comprise pushing means and pulling means, which pushing and pulling means in the fixed state exert forces on the pane in substantially opposite directions at respective engaging points, wherein the engaging points of the engaging means on the frame extend in a plane curved in two mutually perpendicular directions, and the pane is bent in two directions during fixing of the pane to the frame, such that substantially spherical or saddle-shaped cold-bent glazing is obtained.

## Description

The invention relates to a method for the production of cold-bent glazing, wherein use is made of a composite pane consisting of a sandwich of at least two flat glass panes and a plastic layer placed between each pair of glass panes and adhered thereto, wherein the pane is bent and is fixed to a frame at an ambient temperature which lies below the softening temperature of the plastic layer, and wherein after being fixed to the frame the pane is not heated, or is at least not heated as a whole, to a temperature lying above the softening temperature of the plastic layer, wherein the frame comprises engaging means for fixing the pane to the frame and holding the pane in bent state in position on the frame, wherein the engaging means comprise pushing means and pulling means, which pushing and pulling means in the fixed state exert forces on the pane in substantially opposite directions at respective engaging points.

Such a method is known from WO 98/01649. Strong, durable and attractive cylindrically bent glazing, which is for instance highly suitable for transparent canopies of the platforms of train and/or bus stations, can be obtained in economic manner by means of this known method. The method is also applied for glazing in facades, glazing in lift shafts and the like. Known examples of glazing produced in this way can be found at Amsterdam Central bus station, Amsterdam-Sloterdijk Hemboog station, Utrecht Central station, the Jinso Pavilion at the Amsterdam ArenA, and the European Space Research and Technology Center (ESTEC) in Noordwijk, all in the Netherlands.

The object of the invention is to also enable production of other types of glazing by means of the method.

The method has for this purpose the feature that the engaging points of the engaging means on the frame extend in a plane curved in two mutually perpendicular directions, and that the pane is bent in two directions during fixing of the pane to the frame, such that substantially spherical or saddle-shaped cold-bent glazing is obtained.

Cold-bending flat sandwich panes, consisting of two glass panes and a plastic film placed between the glass panes, in two different directions at the same time was heretofore considered impossible because the preconception existed that when cold-bending such panes in the one direction, the pane would acquire a stiffness against bending in the other direction such that this bending in the other direction could not be realized in practice, or not without damage to the pane (immediately during bending, or otherwise after some time).

The merit of the invention is that it disproves this preconception. Cold bending makes it possible to arrange safe and scratch-resistant dome-shaped bent glazing which lasts for years, for instance for the purpose of transparent roofs of train stations. The method according to the invention results in considerable cost-saving and excellent practical results. A not inconsiderable advantage of glazing cold-bent in two directions is that it has acquired a greater stiffness and strength owing to the bending.

In a preferred embodiment the glazing is substantially spherical. The radius of the curvatures of at least a part of the pane preferably amounts to a maximum of 40 m, more preferably a maximum of 25 m, in both directions. The radius of the curvatures can differ from each other in both directions.

The sheets of glass preferably have a thickness of 3-5 mm and the plastic layer preferably has a thickness of 1-3 mm. The sheets of glass preferably consist of thermally strengthened or hardened glass and the plastic layer preferably consists of polyvinyl butyral. Such sandwich panes are commercially available.

In a preferred embodiment the frame forms a part, for instance a roof, of a building or canopy. The frame then preferably forms part of the building or canopy connected to the ground before the pane is fixed to the frame. The method can therefore be performed at the building site of the building or canopy. Under normal weather conditions the ambient temperature during bending is below 50°C.

The invention also relates to spherical or saddle-shaped cold-bent glazing produced from a composite pane consisting of a sandwich of at least two flat glass panes and a plastic layer placed between each pair of glass panes and adhered thereto. The invention also relates to a structure provided with spherical or saddle-shaped cold-bent glazing.

The invention will now be further elucidated by way of example with reference to the figures, in which:
Figure 1 shows a schematic cross-section of glazing before bending of the composite pane;
Figure 2 shows a cross-section of the composite pane in flat state;
Figure 3 shows a perspective view of cold-bent glazing;
Figure 4 shows a schematic perspective view of a part of cold-bent glazing.

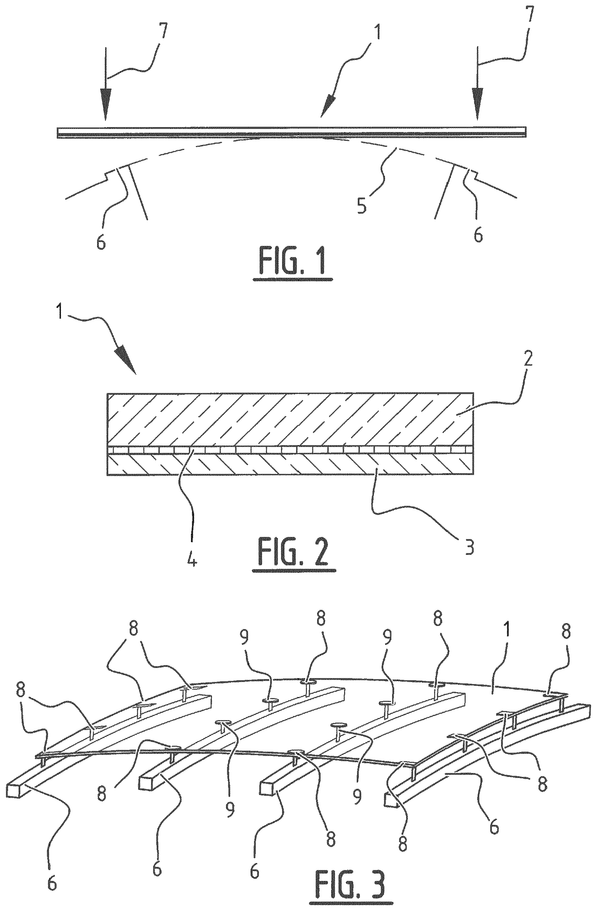

Figures 1 and 2 show a flat composite pane 1 which consists of a sandwich of two glass panes 2 and 3 and a single or multiple layer of plastic 4 placed between these glass panes and which is brought into engagement symmetrically with a curved surface 5 of a frame 6 and is then pushed close to the ends in the direction of frame 6 (see arrows 7). According to the invention, this takes place in two substantially mutually perpendicular directions, simultaneously or sequentially. Sandwich pane 1 can also comprise more than two glass panes, wherein a plastic layer is situated between each pair of glass panes.

The result can be seen in detail in figure 3. By means of cold bending the composite pane 1 has in bent state been brought into engagement with frame 6, wherein the pane is pulled in the direction of frame 6 and held in place close to the corners and edges using fixing means 8. These fixing means 8 can for instance also consist of bolts extending through holes in the pane and frame 6, or of robust glazing beads. The middle supports 9 on the frame push pane 1 in the middle part of the pane in the direction away from the frame.

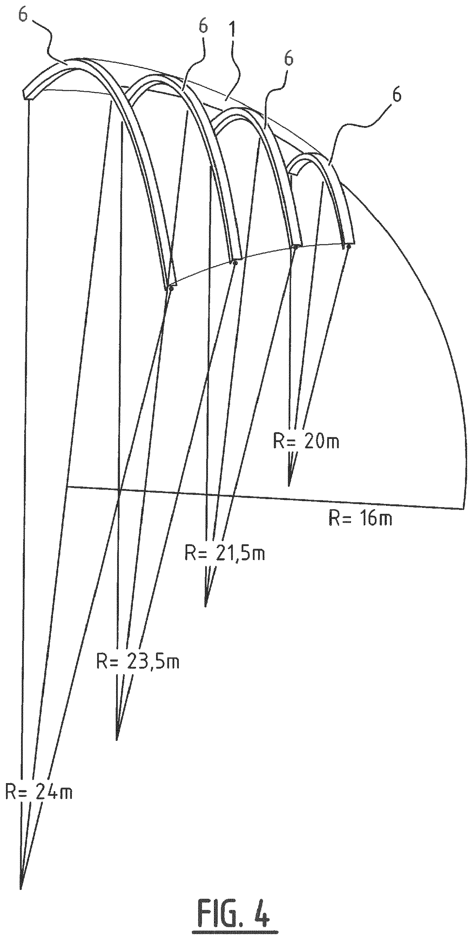

Pane 2 for instance has a thickness of 5 mm, pane 3 a thickness of 3 mm and the thickness of a film made up of two different plastic materials is for instance about 1.5 mm. The bending radius in the one direction can for instance amount to 24 m, the radius in the direction perpendicularly thereof for instance 16 m. It is also possible to apply different bending radii at a mutual distance in the parallel directions, as shown in figure 4.

The invention has thus been described by means of preferred embodiments. It is to be understood, however, that this disclosure is merely illustrative. Various details of the structure and function were presented, but changes made therein, to the full extent extended by the general meaning of the terms in which the appended claims are expressed, are understood to be within the principle of the present invention. The description and drawings shall be used to interpret the claims. The claims should not be interpreted as meaning that the extent of the protection sought is to be understood as that defined by the strict, literal meaning of the wording used in the claims, the description and drawings being employed only for the purpose of resolving an ambiguity found in the claims. For the purpose of determining the extent of protection sought by the claims, due account shall be taken of any element which is equivalent to an element specified therein.

## Claims

1. Method for the production of cold-bent glazing, wherein use is made of a composite pane consisting of a sandwich of at least two flat glass panes and a plastic layer placed between each pair of glass panes and adhered thereto, wherein the pane is bent and is fixed to a frame at an ambient temperature which lies below the softening temperature of the plastic layer, and wherein after being fixed to the frame the pane is not heated, or is at least not heated as a whole, to a temperature lying above the softening temperature of the plastic layer,
wherein the frame comprises engaging means for fixing the pane to the frame and holding the pane in bent state in position on the frame, wherein the engaging means comprise pushing means and pulling means, which pushing and pulling means in the fixed state exert forces on the pane in substantially opposite directions at respective engaging points,
**characterized in that** the engaging points of the engaging means on the frame extend in a plane curved in two mutually perpendicular directions, and that the pane is bent in two directions during fixing of the pane to the frame, such that substantially spherical or saddle-shaped cold-bent glazing is obtained.

2. Method according to claim 1, **characterized in that** the glazing is substantially spherical.

3. Method according to claim 1 or 2, **characterized in that** the radius of the curvatures of at least a part of the pane amounts to a maximum of 40 m, preferably a maximum of 25 m, in both directions.

4. Method according to any of the foregoing claims, **characterized in that** the radius of the curvatures differ from each other in both directions.

5. Method according to any of the foregoing claims, **characterized in that** the ambient temperature during bending is below 50°C.

6. Method according to any of the foregoing claims, **characterized in that** the sheets of glass have a thickness of 3-5 mm and the plastic layer has a thickness of 1-3 mm.

7. Method according to any of the foregoing claims, **characterized in that** the sheets of glass consist of thermally strengthened or hardened glass.

8. Method according to any of the foregoing claims, **characterized in that** the plastic layer consists of polyvinyl butyral.

9. Method according to any of the foregoing claims, **characterized in that** the frame forms a part, for instance a roof, of a building or canopy.

10. Method according to claim 9, **characterized in that** the frame forms part of the building or canopy connected to the ground before the pane is fixed to the frame.

11. Spherical or saddle-shaped cold-bent glazing produced from a composite pane consisting of a sandwich of at least two flat glass panes and a plastic layer placed between each pair of glass panes and adhered thereto.

12. Structure provided with glazing according to any of the foregoing claims.
